(19) Europäisches Patentamt / European Patent Office / Office européen des brevets

(11) **EP 2 998 050 A1**

(12) **EUROPEAN PATENT APPLICATION**
published in accordance with Art. 153(4) EPC

(43) Date of publication:
**23.03.2016 Bulletin 2016/12**

(21) Application number: **14797257.4**

(22) Date of filing: **14.05.2014**

(51) Int Cl.:
*B22F 7/06* [(2006.01)]  *B22F 1/02* [(2006.01)]
*B22F 9/24* [(2006.01)]  *B82Y 30/00* [(2011.01)]
*H01B 1/00* [(2006.01)]  *H01B 1/22* [(2006.01)]

(86) International application number:
**PCT/JP2014/002555**

(87) International publication number:
**WO 2014/185073 (20.11.2014 Gazette 2014/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.05.2013 JP 2013104533**

(71) Applicant: **Bando Chemical Industries, Ltd.
Kobe-shi, Hyogo 650-0047 (JP)**

(72) Inventors:
• **WATANABE, Tomofumi**
  **Kobe-shi, Hyogo 650-0047 (JP)**
• **SHIMOYAMA, Kenji**
  **Kobe-shi, Hyogo 650-0047 (JP)**
• **TAKESUE, Masafumi**
  **Kobe-shi, Hyogo 650-0047 (JP)**

(74) Representative: **Gill, Stephen Charles et al
Mewburn Ellis LLP
City Tower
40 Basinghall Street
London EC2V 5DE (GB)**

(54) **COMPOSITION FOR METAL BONDING**

(57) Provided is a composition for metal bonding, especially a bonding composition containing metal particles, which is capable of achieving high bonding strength by bonding at a relatively low temperature without the application of a pressure, and which has heat resistance and is thus not susceptible to decrease in the bonding strength due to decomposition or deterioration of a resin component when the service temperature thereof is increased. A bonding composition which is characterized by containing two or more kinds of metal particles having different average particle diameters, an organic component and a dispersant, and which is also characterized in that the particle diameter ratio of the average particle diameter (DS) of metal particles (S) that have the smallest average particle diameter to the average particle diameter (DL) of metal particles (L) that have the largest average particle diameter, namely DS/DL is from $1 \times 10^{-4}$ to 0.5.

EP 2 998 050 A1

**Description**

**Technical Field**

The present invention relates to a composition for metal bonding containing metal particles, and more specifically relates to a composition for bonding metals which is suitable to bond metal components.

**Background Technology**

In order to mechanically and/or electrically and/or thermally bond a metal component and another metal component, there have been used conventionally, a solder, a conductive adhesive, a silver paste, an anisotropically-conductive film, and the like. The conductive adhesive, silver paste, and anisotropically-conductive film are sometimes used when bonding not only the metal components but ceramic components, resin components. For example, there are bonding of a light-emitting element such as LED to a substrate, bonding of a semiconductor chip to a substrate, and further bonding of these substrates to a radiation member.

Among them, an adhesive, paste and film which contain the solder and a conductive filler made of a metal are used for bonding at a portion requiring an electric connection. In addition, since a metal generally has a high thermal conductivity, these paste and film which contain the solder and a conductive filler made of a metal may be used for increasing in heat dissipation.

To the contrary, for example, when an illumination device or a light-emitting device with high luminance is produced by using a light-emitting element such as LED, or when a semiconductor device is produced by using a semiconductor element that is referred to as a power device, and that performs highly efficient at a high temperature, a calorific value tends to increase. Although an efficiency of a device or an element is attempted to be improved for reducing heat generation, a sufficient result has not yet been obtained at this time, and the operating temperature of a device or an element is increased practically.

Further, from a viewpoint of prevention of a device from damage upon bonding, a bonding material that can ensure sufficient strength at a low bonding temperature (for example, at 300°C or lower) is in required. Therefore, with respect to the bonding material for bonding a device, an element or the like, it is required not only to lowering the bonding temperature, but also to give an enough thermal resistance that tolerates increase of the operating temperature due to action of the device after bonding and can maintain sufficient bonding strength, but conventional bonding materials cannot often sufficiently respond to this request. For example, the members are bonded by the solder via a process to heat the metal at its melting point or higher (re-flow process), but since the melting point is unique to the composition in general, when attempting the heat resistive temperature increase, the heating (bonding) temperature is also increased.

In addition, when several elements and substrates are bonded in the overlapping manner, it is necessary to provide heating steps for the number of the layers to be overlapped, and in order to prevent melting at the already-bonded portion, it is necessary to lower a melting point (bonding temperature) of a solder that is used for the next bonding, and further it is necessary that kinds of chemical composition of solder are required for the number of the layers to be overlapped, and thus handling becomes complicated.

On the other hand, in the conductive adhesive, silver paste and anisotropically-conductive film, members are bonded to each other by utilizing thermosetting of a contained epoxy resin and the like, but when the operating temperature of the obtained device or element is increased, there is a case that the resin component may be decomposed or deteriorated. For example, in Patent Literature 1 (Japanese Patent Laid-Open No. 2008-63688), though microparticles that are designed to obtain a higher bonding strength when members to be bonded are bonded by using a main material of the bonding member are proposed, the problems of decomposition and deterioration of the resin components upon increasing of the operating temperature have not been solved.

In addition, as a high temperature solder used at a high temperature, a solder containing lead has been used conventionally. Since lead is poisonous, a solder is drastically changed to a lead-free solder. However, since there is no other good substitute of the high temperature solder, the lead-containing solder is still used, but a bonding material with no lead is desired from the environmental point of view.

Recently, there has been developed a bonding material that contains a metal nano-particles mainly of a noble metal such as silver or gold (for example, Japanese Patent Laid-Open Application 2012-046779). However when achieving bonding by using the metal nano-particles, the bonding should be conducted at 300 to 350°C under a pressure in an inert atmosphere, and thus there are problems that the bonding temperature should be lowered and the pressure should not be added.

PRIOR ART LITERATURE

Patent Literature

Patent Literature 1: Japanese Patent Laid-Open Application 2008-63688
Patent Literature 2: Japanese Patent Laid-Open Application 2012-046779

SUMMARY OF INVENTION

Problem to be Solved by the Invention

In light of the circumstances above, the objective of the present invention is to provide a composition for metal bonding that can obtain high bonding strength by bonding at comparatively low temperature without the application of a pressure, and, that is equipped with thermal resistance where it is difficult to cause reduction in bonding strength due to decomposition or deterioration of a resin component upon increase of operating temperature, and particularly to provide a composition for metal bonding containing metal particles.

Means for Solving the Problem

In order to solve the above problems, as the result of incentive study by the present inventors as to the formulation of the composition for metal bonding, the inventors have found that it is very effective that, with respect to a composition for metal bonding containing two or more kinds of metal particles having different average particle sizes, an organic component and a dispersant, a combination of a ratio of average particle sizes of the metal particles, and the like are optimized in order to solve the above problems, and then the present invention has been completed.

Namely the present invention can provide a composition for metal bonding, comprising:

two or more kinds of metal particles having different average particle sizes,
an organic component, and
a dispersant,
wherein a particle size ratio $(Ds/D_L)$ of an average particle size $D_S$ of metal particles S which have the smallest average particle size to an average particle size $D_L$ of metal particles L which have the largest average particle size is $1 \times 10^{-4}$ to 0.5.

In the above composition for metal bonding of the present invention, it is preferable that the particle size ratio $(Ds/D_L)$ is $1 \times 10^{-3}$ to 0.2.

In the above composition for metal bonding of the present invention, the average particle size of the metal particles S which constitute the composition for metal bonding according to the present invention is suitably a nano meter size which causes depression of melting point, desirably 1 to 100 nm. It is preferable that the organic component which is adhered on at least a part of the surface of the metal particles S is an alkylamine and a polymer dispersant. Further, the alkylamine preferably contains at least one kind of an amine having 4 to 7 carbon atoms.

In the above composition for metal bonding of the present invention, the desirable average particle size of the metal particles L which constitute the composition for metal bonding according to the present invention is suitably 0.1 $\mu$m to 10 $\mu$m. In the above composition for metal bonding according to the present invention, it is preferable that the metal particles L has less than 1 % by mass of a heating loss when heating from a room temperature to 500°C at a temperature elevating rate of 10°C/min in a nitrogen atmosphere.

In the above composition for metal bonding of the present invention, it is preferable that the metal particles do not contain particles that are converted to metal by the thermal decomposition, and the metal particles are preferably silver-based metal particles.

Effect of the Invention

According to the present invention, a composition for metal bonding that can obtain high bonding strength by bonding at comparatively low temperature without the application of a pressure, and, that is equipped with thermal resistance where it is difficult to cause reduction in bonding strength due to decomposition or deterioration of a resin component upon increase of operating temperature, and particularly to provide a composition for metal bonding containing metal particles can be provided.

Brief Explanation of the Drawings

[Fig. 1] Results of measurement of particle size of silver fine particles by small-angle X-ray scattering method.
[Fig. 2] A line graph showing the heating loss of the silver particle 1.
[Fig. 3] Results of measurement of particle size of silver particle 1 by dynamic light scattering method.
[Fig. 4] Results of coefficient of line expansion.
[Fig. 5] A scanning electron microscope photograph of the dried silver particle composition 2 for bonding.

Mode for Carrying Out the Invention

Hereafter, one preferred embodiment of the composition for metal bonding of the present invention will be described in detail. Furthermore, the description below merely indicates one embodiment of the present invention, and the present invention shall not be limited to these, and redundant descriptions may be omitted.

(1) Composition for metal bonding

A composition for metal bonding according to the present embodiment is characterized by containing two or more kinds of metals having different average particle sizes, an organic component and a dispersant. In the following, these components are explained.

(1-1) Metal particles

Although the metal particles of the composition for metal bonding of the present embodiment are not particularly limited, since conductivity of an adhesion layer obtained by using the composition for metal bonding of the present embodiment can be improved, it is preferable to be metal where ionization tendency is smaller (nobler) than zinc.

Examples of the metal include at least one of gold, silver, copper, nickel, bismuth, tin, iron and platinum group elements (ruthenium, rhodium, palladium, osmium, iridium, platinum). As the metal, at least one of metal particles selected from the group consisting of gold, silver, copper, nickel, bismuth, tin and the platinum group is preferable, and more preferably is copper or a metal where its ionization tendency is smaller (nobler) than copper, i.e., at least one of gold, platinum, silver and copper. These metals may be used alone or in combination of two or more, and as a method for combination, there is a case of using alloy particles containing a plurality of metals, or a case of using metal particles having a core-shell structure or a multilayered structure.

For example, when silver particles are used for the metal particles of the composition for metal bonding, electroconductivity of the adhered layer formed by using the composition for metal bonding of the present embodiment becomes excellent, but in light of the problem of migration, it can become difficult for the migration to occur by using the composition for metal bonding made of silver and other metals. As "other metals", metals where its ionization series above is nobler than hydrogen, i.e., gold, copper, platinum and palladium are preferable.

The average particle size of the metal particle in the composition for metal bonding of the present embodiment is not particularly limited as long within the range that does not impair the effect of the present invention, but it is preferable that the average particle size $D_S$ of the metal particles S having the smallest particle size is an average particle size of 1 to 100 nm so as to cause melting point depression, more preferably 1 to 50 nm. When the average particle size of the metal particle S is 1 nm or more, the composition for metal bonding that can form an excellent adhesive layer is obtained, and the metal particle manufacturing will not cause increase in cost, and is practical. Further, when 200 nm or less, it is difficult to change dispersibility of the metal particles S with laps of time, and is preferable. The average particle size Ds of the metal particles S is preferably within the above range and 2 nm or more. In addition, the average particle size $D_S$ of the metal particles S is preferably within the above range and 20 nm or less.

Further, a particle size ratio ($Ds/D_L$) of an average particle size $D_S$ of metal particles S which have the smallest average particle size to an average particle size $D_L$ of metal particles L which have the largest average particle size is preferably $1 \times 10^{-4}$ to 0.9. When mixing the metal particles S and the metal particles L, the bonding is accomplished by depressing the melting point of the metal particles S around the metal particles L.

By controlling the particle size ratio ($Ds/D_L$) within the above range, it is possible to form a bonding layer which has a low heating shrinkage and is dense. When the space around the metal particles L is filled with the metal particles S, the packing density of the metal particles is improved. Though, even when the metal particles S are used alone, the bonding can be achieved at a low temperature, a volume shrinkage due to largeness of the metal particles S caused by progressing of the sintering of the metal particles S with each other, the members to be bonded cannot be followed thereto. As a result, a space is formed in the bonding layer, and thus, reliability at a high temperature of the bonded part and the like are lost. The particle size ratio ($Ds/D_L$) is particularly preferably 1 x 10$^{-3}$ or more within the above range. The particle size ratio ($Ds/D_L$) is particularly preferably 0.2 or less within the above range.

When the metal particles L are used alone, sintering is not proceeded at a low temperature, for example, less than 300°C, and thus good bonding cannot be achieved. In advance with the elevating of the bonding temperature, though the sintering of the metal particles L can be produced to a certain degree, the space between the metal particles L inevitably remains. Namely, when using either of the metal particles S or the metal particles L, anyhow, the space is formed in the bonding layer to make a density small. To the contrary, when using the metal particles S and the metal particles L having the above particle sizes in the mixing manner, the sintering can be completed at a relatively low temperature without large volume shrinkage, and thus a dense bonding layer can be formed even under no pressure. The particle size of the metal particles L is preferably 0.1 μm to 10 μm, more preferably 0.1 μm to 5 μm, particularly preferably 0.2 μm to 4 μm. Further, a mass ratio ($M_S/M_L$) of a mass Ms of the metal particles S and a mass $M_L$ to the metal particles L which are contained in the composition for metal bonding is preferably 3/7 to 7/3, particularly preferably 4/6 to 6/4.

Herein, the average particle size of the metal particles in the composition for metal bonding can be measured with a dynamic light scattering method, a small-angle X-ray scattering method or a wide-angle X-ray diffraction method. In order to show depression of the melting point of the metal particles with a nano size, a crystallite diameter obtained with the X-ray diffraction method is suitable. For example, in the wide-angle X-ray diffraction method, to be more specific, the particle size can be measured within the range where 2θ is 30 ° to 80 ° with the diffraction method using RINT-Ultima III available from Rigaku Corporation. In this case, samples should be measured by thinning so as to be a flat surface on a glass plate with approximately 0.1 to 1 mm in depth of a concave portion in the center portion. Further, the crystallite diameter (D) calculated by substituting a half bandwidth of obtained diffraction spectrum using JADE available from Rigaku Corporation into the Scherrer equation should be regarded as the average particle size.

$$D = K\lambda/B \cos\theta$$

Herein, K: Scherrer constant (0.9), λ: wavelength of X-ray, B: half bandwidth of diffraction line, θ: Bragg angle.

It is preferable that the metal particles in the composition for metal bonding according to the present embodiment do not contain particles that are converted to metal by the thermal decomposition. For example, when containing particles which are decomposed by heating to become a metal such as silver oxide or silver carbonate, since a gas such as oxygen or carbon dioxide and a metal are yielded upon the decomposition of the particles, the volume shrinkage becomes large. Since the volume shrinkage makes the bonding without pressure difficult, it is preferable that the particles that are converted to metal by the thermal decomposition is not used as the metal particles in the composition for metal bonding according to the present embodiment.

(1-2) Organic component adhered at least onto surfaces of metal particles S

In the composition for metal bonding of the present embodiment, the organic component adhered at least onto a portion of surfaces of the metal particles S substantially constitutes the metal colloid particles along with the metal particles as a so-called dispersant. It is a concept that the organic component does not include an organic substance where its trace amount is adhered onto the metal particles and the like, such as a trace of an organic substance contained in metal initially as an impurity, a trace of an organic substance where it is mixed during the manufacturing process and is adhered onto a metallic component, a residual reducing agent or residual dispersant that could not be removed during the cleaning process. Furthermore, "trace amount" above specifically indicates less than 1 % by mass in the metal colloid particles.

The above organic component is an organic substance which can prevent the metal particles S from agglomeration by coating the metal particles S, and can form the metal colloid particles, and is preferably configured by an alkylamine and a polymer dispersant. By adhering the polymer dispersant to at least a part of the metal particles S in an appropriate amount, dispersibility of the metal particles S can be maintained without missing low temperature sintering property. The morphology of coating is not particularly defined, but in the present embodiment, the organic component is preferably contains an unsaturated hydrocarbon and an amine having 4 to 7 carbon atoms from viewpoints of dispersibility and conductivity. In the case of chemically or physically bonding with the metal particles, it is also believed that these organic components are converted to anion or cation, and in the present embodiment, ions, complexes derived from these organic component and the like are contained in the above organic components.

The amine having 4 to 7 carbon atoms may be a linear or branched even if having 4 to 7 carbon atoms, or may have a side chain. Examples include an alkylamine (linear alkylamine or may have an side chain) such as butylamine, pentylamine, hexylamine, hexylamine; a cycloalkylamine such as cyclopentylamine or cyclohexylamine; a primary amine such as allylamine, e.g. aniline; a secondary amine such as dipropylamine, dibutylamine, piperidine or hexamethyleneimine; and tertiary amine, such as tripropylamine, dimethylpropanediamine, cyclohexyldimethylamine, pyridine or quinoline.

The above amine having 4 to 7 carbon atoms may be a compound containing a functional group other than amine, such as a hydroxyl group, a carboxyl group, an alkoxy group, a carbonyl group, an ester group or a mercapto group. In this case, the number of carbon atoms in the functional group is not included in the number of carbon atoms of the "amine having 4 to 7 carbon atoms". It is preferable that the number of nitrogen atoms derived from the amine is greater than the number of functional groups other than amine. Further, the amine may be used alone or in combination of two or more. In addition, a boiling point at a normal temperature is preferably 300 °C or less, further preferably 250 °C or less.

The composition for metal bonding according to the present embodiment may contain a carboxylic acid in addition to the amine having 4 to 7 carbon atoms within the scope that does not impair the effect of the present invention. In the carboxylic acid, the carboxyl group in one molecule has a relatively high polarity to generate interaction due to hydrogen bond, and the remaining part other than the functional group shows a relatively low polarity. Further, the carboxyl group tends to show acidic property. In addition, when the carboxylic acid is localized (adhered) to at least a part of the surface of the metal particles S (namely, at least a part of the surface of the metal particles S being covered with) in the composition for metal bonding according to the present embodiment, it is possible to make the organic component and the metal particles S affinity enough to prevent the metal particles S from coagulation (enhancing dispersibility).

As the carboxylic acid, a compound having at least one carboxyl group can be broadly used, and example include formic acid, oxalic acid, acetic acid, hexane acid, acrylic acid, octylic acid, oleic acid and the like. A carboxyl group in a part of the carboxylic acid may form a salt with a metallic ion. Furthermore, as to the metal ion, two or more of metal ions may be contained.

The carboxylic acid may be a compound containing a functional group other than carboxyl group such as amino group, hydroxyl group, an alkoxy group, carbonyl group, an ester group or mercapto group. In this case, the number of carboxyl groups is preferably more than the number of functional groups other than carboxyl groups. Further, the carboxylic acid may be used alone, respectively, or in combination of two or more. In addition, it is preferable that a boiling point at a normal temperature is preferably 300 °C or less, further preferably 250 °C or less. Further, an amine and a carboxylic acid form an amide. Therefore, since the amide group is appropriately adsorbed on the surface of the silver particle, the amide group may be contained in the organic component.

As the above polymer dispersant, any commercial polymer dispersant can be used. Examples of the commercially available polymer dispersant include include SOLSPERSE 11200, SOLSPERSE 13940, SOLSPERSE 16000, SOLSPERSE 17000, SOLSPERSE 18000, SOLSPERSE 20000, SOLSPERSE 24000, SOLSPERSE 26000, SOLSPERSE 27000 and SOLSPERSE 28000 (available from Lubrizol Japan Corporation); DISPERBYK 142, DISPERBYK 160, DISPERBYK 161, DISPERBYK 162, DISPERBYK 163, DISPERBYK 166, DISPERBYK 170, DISPERBYK 180, DISPERBYK 182, DISPERBYK 184, DISPERBYK 190 and DISPERBYK 2155 (available from BYK Japan KK); EFKA-46, EFKA-47, EFKA-48 and EFKA-49 (available from EFKA Chemicals); Polymer 100, Polymer 120, Polymer 150, Polymer 400, Polymer 401, Polymer 402, Polymer 403, Polymer 450, Polymer 451, Polymer 452, Polymer 453 (available from EFKA Chemicals); Ajisper PB711, Ajisper PA111, Ajisper PB811 and Ajisper PW911 (available from AJINOMOTO Co., Ltd.); Flowlen DOPA-15B, Flowlen DOPA-22, Flowlen DOPA-17, Flowlen TG-730W, Flowlen G-700 and Flowlen TG-720W (available from KYOEISHA CHEMICAL Co., Ltd.), and the like. Among them, SOLSPERSE 11200, SOLSPERSE 13940, SOLSPERSE 16000, SOLSPERSE 17000, SOLSPERSE 18000, SOLSPERSE 28000, DISPERBYK 142 or DISPERBYK 2155 is preferable from the viewpoint of low-temperature sinterability and dispersing stability.

A content of the polymer dispersant is preferably 0.1 to 15 % by mass. When the content of the polymer dispersant is 0.1 % or more, the dispersibility of the obtained composition for bonding becomes better, but when the content is too larger, the bonding property becomes worse. From this point of view, the content of the polymer dispersant is more preferably 0.2 to 5 % by mass, further preferably 0.3 to 4 % by mass.

The content of the organic component in the metal colloid in the composition for metal bonding of the present embodiment is preferably 0.5 to 50 % by mass. When the content of the organic component is 0.5 % by mass or more, the storage stability of the obtained composition for metal bonding tends to be better, and when 50 % by mass or less, the conductivity of the composition for metal bonding tends to be better. The content of the organic component is more preferably 1 to 30 % by mass, further preferably 2 to 15 % by mass.

As a composition ratio (mass) in case of using in combination of the amine and the carboxylic acid, it can be optionally selected within the range of 1/99 to 99/1, and is preferably 20/80 to 98/2, further preferably 30/70 to 97/3. Furthermore, for the amine or carboxylic acid, several kinds of amines or carboxylic acids may be used, respectively.

Examples of the unsaturated hydrocarbon contained in the composition for metal bonding according to the present embodiment include ethylene, acetylene, benzene, acetone, 1-hexene, 1-octene, 4-vinylcyclohexene, cyclohexanone, a terpene-based alcohol, allyl alcohol, oleyl alcohol, 2-paltoleic acid, petroselinic acid, oleic acid, elaidic acid, thiocyanic acid, ricinoleic acid, linolic acid, linoekaidic acid, linoleic acid, arachidonic acid, acrylic acid, methacrylic acid, gallic acid, salicylic acid, and the like.

Among them, an unsaturated hydrocarbon having hydroxyl group is preferable. The hydroxyl group is easy to coordinate with the surface of the metal particles S to inhibit the coagulation of the metal particles S. Examples of the unsaturated hydrocarbon having hydroxyl group include a terpene-based alcohol, allyl alcohol, oleyl alcohol, thiocyanic acid, ricinoleic acid, gallic acid, salicylic acid, and the like. Preferable is an unsaturated fatty acid having hydroxyl group such as thiocyanic acid, ricinoleic acid, gallic acid, salicylic acid, and the like.

The above unsaturated hydrocarbon is preferably ricinoleic acid. Ricinoleic acid has carboxyl group and hydroxyl group, and adsorbs on the surface of the metal particles S to disperse the metal particles S uniformly and accelerates the fusion of the metal particles S.

In the composition for metal bonding of the present embodiment, in addition to the components above, within the scope that does not impair the effect of the present invention, in order to add functions such as appropriate viscosity, adhesiveness, drying characteristics or printability, according to purpose for uses, optional components such as a dispersing medium, an oligomer component that fulfills, for example, a role of binder, a resin component, an organic solvent (a portion of solid may be dissolved or dispersed), a surfactant, a thickener or a surface tension adjuster may be added. Such optional components are not particularly limited.

As the dispersing medium among the optional components, various components are usable within the scope that does not impair the effect of the present invention, and examples include a hydrocarbon, an alcohol and the like.

Examples of the hydrocarbon include an aliphatic hydrocarbon, a cyclic hydrocarbon, an alicyclic hydrocarbon and the like, and they may be used alone, respectively, or in combination of two or more.

Examples of the aliphatic hydrocarbon include a saturated or unsaturated aliphatic hydrocarbon such as tetradecane, octadecane, heptamethylnonane, tetramethylpentadecane, hexane, heptan, octane, nonane, decane, tridecane, methylpentane, normal paraffin or isoparaffin, and the like.

Examples of the cyclic hydrocarbon include toluene, xylene and the like.

Further, examples of the alicyclic hydrocarbon include limonene, dipentene, terpinene, terpinene (also referred to as terpinene), nesol, cinene, orange flavor, terpinolene, terpinolene (also referred to as terpinolene), phellandrene, menthadiene, terebene, dihydrocymene, moslene, isoterpinene, isoterpinene (also referred to as isoterpinene), crithmene, kautschin, cajeputen, oilimene, pinene, terebine, menthane, pinane, terpene, cyclohexane and the like.

Further, the alcohol is a compound containing one or more OH groups in the molecular structure, and examples include an aliphatic alcohol, a cyclic alcohol and an alicyclic alcohol, and they can be used alone, respectively, or in combination of two or more. Further, a part of the OH groups may be converted to an acetoxy group or the like within a scope that does not impair the effect of the present invention.

Examples of the aliphatic alcohol include a saturated or unsaturated $C_{6-30}$ aliphatic alcohol such as heptanol, octanol (such as 1-octanol, 2-octanol or 3-octanol), decanol (such as 1-decanol), lauryl alcohol, tetradecyl alcohol, cetyl alcohol, 2-ethyl-1-hexanol, octadecyl alcohol, hexadecenol or oleyl alcohol.

Examples of the cyclic alcohol include cresol, eugenol and the like.

Further, examples of the alicyclic alcohol include a cycloalkanol such as cyclohexanol; a terpene alcohol (monoterpene alcohol, or the like) such as terpineol (including $\alpha$, $\beta$ and y isomers, or any mixture thereof) or dihydroterpene; dihydroterpineol; myrtenol; sobrerol; menthol; carveol; perillyl alcohol; pinocarveol; sobrerol; verbenol and the like.

The content in case of containing a dispersing medium in the composition for metal bonding of the present embodiment should be adjusted according to desired characteristics such as viscosity, and the content of the dispersion medium in the composition for bonding is preferably 1 to 30 % by mass. When the content of the dispersing medium is 1 to 30 % by mass, an effect to adjust the viscosity can be obtained within the range that is easy to operate as a composition for bonding. The content of the dispersing medium is more preferably 1 to 20 % by mass, further preferably 1 to 15 % by mass.

Examples of the resin component include a polyester-based resin, a polyurethane-based resin such as a blocked polyisocyanate, a polyacrylate-based resin, a polyacrylamide-based resin, a polyether-based resin, a melamine-based resin, a terpene-based resin and the like, and these can be used alone, respectively, or in combination of two or more.

Examples of the organic solvent include, excepting the ones exemplified as the dispersing media, methyl alcohol, ethyl alcohol, n-propylalcohol, 2-propyl alcohol, 1,3-propanediol, 1,2-propanediol, 1,4-butanediol, 1,2,6-hexantril, 1-ethoxy-2-propanol, 2-butoxyethanol, ethylene glycol, diethylene glycol, triethylene glycol, polyethylene glycol having a weight-average molecular weight within the range of 200 or more and 1,000 or less, propylene glycol, dipropylene glycol, tripropylene glycol, polypropylene glycol having weight-average molecular weight within the range of 300 or more and 1,000 or less, N,N-dimethylformamide, dimethylsulfoxide, N-methyl-2-pyrrolidone, N,N-dimethylacetamide, glycerin, acetone and the like, and these can be used alone, respectively, or in combination of two or more.

Examples of the thickener include a clay mineral such as clay, bentonite or hectorite; an emulsion such as a polyester-based emulsion resin, an acrylic-based emulsion resin, a polyurethane-based emulsion resin or a blocked isocyanate; a cellulose derivative such as methyl cellulose, carboxymethyl cellulose, hydroxyethyl cellulose, hydroxypropyl cellulose, hydroxypropyl methylcellulose; a polysaccharide such as xanthane gum or guar gum, and the like, and these can be used alone, respectively, or in combination of two or more.

Further, a surfactant which is different from the above organic components may be added. In a multicomponent solvent-system metal colloid dispersion, roughness of coating surface due to a difference in a volatile rate upon drying and bias of solid content are easily happened. These disadvantages are controlled by adding a surfactant into the composition for bonding of the present embodiment, and a composition for bonding that can form a uniform conductive coating film can be obtained.

The surfactant being usable in the present embodiment is not particularly limited, but any of an anionic surfactant, a cationic surfactant and a nonionic surfactant are usable, and includes, for example, an alkyl benzene sulfonate, a quaternary ammonium salt and the like. Since an effect can be obtained with a small additive amount, a fluorine-based surfactant is preferable.

As the method for adjusting the amount of the organic component within a predetermined range, as described below, adjustment by heating is simpler. Further, the amount of the organic component to be added on the occasion of producing metal particles S can be adjusted. Cleaning conditions and the number of times after the metal particle S adjustment may be changed. Heating can be conducted with an oven or an evaporator, and it can be conducted under reduced pressure. In the case of conducting under ordinary pressure, the heating can be conducted even in the atmosphere or in the inert atmosphere. In addition, for minute adjustment of an amount of the organic component, the above amine (and carboxylic acid) can be added later.

The composition for metal bonding of the present embodiment mainly contains metal colloid particles where the metal particles S mentioned bellow become colloid as a primary component, but regarding a morphology of such metal colloid particles, for example, metal colloid particles configured by adhering an organic substance onto a portion of surfaces of metal particles, metal colloid particles where their surfaces are coated with an organic component using the above metal particles S as a core, metal colloid particles that are configured by mixing these and the like can be exemplified, but it is not particularly limited. Among them, the metal colloid particles where their surfaces are coated with the organic component using the metal particles S as a core are preferable. One skilled in the art can arbitrarily prepare metal colloid particles having the morphology using a known technology in the field.

The composition for metal bonding of the present embodiment is a fluent material that contains primarily the colloid particles made from the metal particles S and the organic component and the metal particles L, and other than these, may contain an organic component that does not configure the metal colloid particles, a dispersion medium, a residual reducing agent or the like.

The viscosity of the composition for metal bonding of the present embodiment should be arbitrarily adjusted within a range not impairing the effects of the present invention, and for example, it should be within the viscosity range of 0.01 to 5000 Pa·S, and the viscosity range of 0.1 to 1,000 Pa·S is more preferable, and the viscosity range of 1 to 100 Pa·S is particularly preferable. The adjustment within the viscosity ranges above enables the application of a broad method as a method for applying a composition for bonding onto the substrate.

As a method for applying the composition for metal bonding onto the substrate, any method can be arbitrarily selected and adopted, for example, from a dipping, a screen printing, a spray method, a barcode method, a spin-coating method, an inkjet method, a dispenser method, an application method by a brush, a casting method, a flexo method, a gravure method, an offset method, a transfer method, a hydrophilic/hydrophobic method and a syringe method and the like.

The viscosity can be adjusted by adjustment of the particle size of the metal particles S an d the metal particles L, adjustment of content of an organic substance, adjustment of additive amounts of a dispersion medium and other components, adjustment of a blending ratio of each component, addition of thickener and the like. The viscosity of the composition for metal bonding can be measured, for example, with a cone-plate viscometer (for example, Leometer MCR301 manufactured by AntonPaar). The total content amount of the metal particles in the composition for metal bonding is preferably 80 to 98 % by mass, particularly preferably 85 to 95 % by mass.

(1-3) Heating loss of Metal Particles L

In the composition for bonding according to the present embodiment, the same organic component as the organic component which is adhered to the surface of the metal particles S may be adhered on the surface of the metal particles L.

A heating loss due to the organic component and the inorganic component which adhere on the surface of the metal particles L is preferably less than 1 % by mass. Specifically, when heating the metal particles L from a room temperature to 500°C at a temperature elevating rate of 10°C/min in a nitrogen atmosphere, a heat loss is preferably less than 1 % by mass. When the heating loss is less than 1 % by mass, an amount of the component to protect the surface of the metal particles L becomes small, the metal particles S can easily be sintered and fused to the metal particles L.

A surface of metal particle is usually covered with an additive such as a lubricant, a dispersant and an anti-rust agent, and a part of the surface is oxidized or sulfureted. Though a noble metal is relatively not oxidized, it is difficult to inhibit the oxidization completely, and for example, even a case of silver, a part of the surface is oxidized or sulfureted (adhesion of inorganic component).

The above organic component and the inorganic component cause the lowering of the bonding strength, and thus are not preferable. By setting the heating loss of the metal particles L at less than 1 % by mass to reduce the organic component and the inorganic component adhered on the surface of the metal particles L, since the organic component and the inorganic component remained in the bonding layer after the bonding process, it is possible to improve the reliability of the bonding portion at a high temperature.

The metal particles L cam be produced, for example, by mixing a source of metal ion and a dispersant, and then reducing. In this case, by optimizing amounts of added dispersant and a reducing agent, or the like, it is possible to control the amount of the organic component. As the metal particles L, a commercially available metal powder with a micron meter or a sub-micron meter size may also be used.

In order to regulate an effective amount of the metal particles L, there may be used a heat treatment to the metal particles L, a washing by an acid (sulfuric acid, hydrochloric acid, and nitric acid, etc.), a washing by a fat-soluble organic solvent such as acetone or methanol, and the like. In addition, during the washing, by applying an ultrasonic wave, the organic component can be remover more efficiently.

The shape of the metal particles L is not particularly limited, and may be any shape of spherical, powdery, scaly, flaky, amorphous, and the like. The average particle size of the metal particles L can be measured with a dynamic light scattering method, a small-angle X-ray scattering method or a wide-angle X-ray diffraction method in the same manner as in the metal particles S. When the particle size is 50 nm or more, since it is difficult to carry out an accurate measurement by the small-angle X-ray scattering method, the dynamic light scattering method is preferably used.

For the small-angle X-ray scattering method, RINT-Ultima III available from Rigaku Corporation may be used, and for the dynamic light scattering method, a diameter distribution measuring apparatus for dynamically light scattering particle LB-550 available from HORIBA, Ltd. May be used. As the other method for measuring the average particle size, there may be used a method where taking a picture of particles by using a scanning electron microscope or a transmission electron microscope , and selecting 50 to 100 particles, and then calculating an arithmetical mean of their particle sizes.

(2) Production of composition for metal bonding

In order to produce the composition for metal bonding according to the present embodiment, it is necessary to prepare the metal particles S which is covered with the organic component and the metal particles L as the main components.

The methods for regulating the amount of the organic component and the weight loss are not particularly limited, and an easy method is to regulate by heating. Also, the regulation may be conducted by regulating an amount of the added organic component at the preparation of the metal particles S, or may be regulated by changing the washing conditions and the number of washings after preparation of the metal particles S. The heating can be carried out by an oven, an evaporator, or the like. The heating temperature may be the range of from about 50 to 300°C, and the heating time may be several minutes to several hours. The heating may be carried out under a reduced pressure. By heating under a reduced pressure, the regulation of the amount of the organic material can be conducted at a lower temperature. When carrying out under a normal pressure, the regulation can be conducted in the atmosphere or in an inert atmosphere. Further, in order to regulate the amount of the organic material sensitively, an amine or a carboxylic acid may be added later.

A method for preparing the metal particles S coated with the organic component of the present invention is not particularly limited, and, for example, there is employed a method where preparing a dispersion which contains the metal particles S, and subsequently, washing the dispersion. A process step for preparing the dispersion which contains the metal particles S is, for example, in the followings, a process where metal salt (or metal ions) dissolved into a solvent should be reduced, and as reduction procedures, a procedure based upon a chemical reduction method should be adopted.

Namely, the metal particles S coated with the above organic component can be prepared by reducing a raw material liquid (a port of the component may not be dissolved but may be dispersed) which contains the metal salt of metal constituting metal particles S, an organic substance as the dispersant and a solvent (basically, an organic system such as toluene, but water may be contained).

As a result of the reduction, the metal colloid particles where the organic component as the dispersant is adhered onto at least a port of surfaces of the metal particles S are obtained. The metal colloid particles can be supplied as the composition for metal bonding as it is, but, by mixing with the metal particles L, more suitable composition for metal bonding can be provided.

As a starting material in order to obtain the metal particles S coated with the organic substance, various known metal salts or their hydrate can be used, and examples include a silver salt such as silver nitrate, silver sulfate, silver chloride, silver oxide, silver acetate, silver oxalate, silver formate, silver nitrite, silver chlorate or silver sulfide; a gold salt such as chlorauric acid or gold potassium chloride; a platinum salt such as chloroplatinic acid, platinum chloride, platinum oxide or potassium chloroplatinate; a palladium salt such as palladium nitrate, palladium acetate, palladium chloride, palladium oxide or palladium suphate; and the like, but are not limited thereto as long as it can be dissolved into an appropriate solvent and can be reduced. Further, these can be used alone or in combination of two or more.

Further, the method to reduce the metal salts in the raw material liquid is not particularly limited, and example include a method by using a reducing agent, a method by irradiating a light such as ultraviolet rays, electron beams, ultrasonic waves or thermal energy, and the like. Among these, from a viewpoint of easy operation, the method by using the reducing agent is preferable.

Examples of the reducing agent include an amine compound such as dimethylaminoethanol, methyldiethanolamine, triethanolamine, phenidone or hydrazine; a hydrogen compound such as sodium boron hydride, hydrogen iodide or hydrogen gas; an oxide such as carbon monoxide, sulfurous acid; a low-valent metal salt such as ferrous sulfate, ferric oxide, ferric dumarate, ferrous lactate, ferric oxalate, ferric sulfide, tin acetate, tin chloride, tin diphosphate, tin oxalate, tin oxide or tin sulfate; a sugar such as ethylene glycol, glycerin, formaldehyde, hydroquinone, pyrogallol, tannin, tannic acid, salicylic acid or D-glucose; and the like, but are not limited thereto as long as it can be dissolved into an appropriate solvent and can be reduced. In case of using the above reducing agent, reduction reaction can be accelerated by adding light and/or heat.

As a specific method for preparing the metal particles S coated with the organic substance by using the metal salt, the organic component, the solvent and the reducing agent, examples include a method where dissolving the metal salt into an organic solvent (for example, toluene and the like) to prepare a solution of the metal salt, and adding an organic substance as the dispersant to the solution of the metal salt, and then gradually adding dropwise the solution where the reducing agent is dissolved, and the like.

In the dispersion containing the metal particles S coated with the organic component as the dispersant obtained in the above mentioned manner, an electrolyte concentration of the entire dispersion tends to be higher, because there are counter ions of metal salt, a residue of the reducing agent and the dispersant other than the metal particles S. Since the dispersion in such a condition has a high conductivity, the metal particles S tend to be coagulated and easy to be deposited. Alternatively, even if the metal particles liquid is not deposited, when the counter ions of the metal salt, a residue of the reducing agent or the dispersant in an amount of excess to the necessary amount for dispersing remains, three is a risk to make the conductivity worse. Then, the metal particles S coated with the organic substance can be surely obtained by washing the solution containing the metal particles S to remove the excess residues.

As the washing method, example include a method where steps for allowing to stand the dispersion containing the metal particles S coated with the organic component for a certain period of time, and adding an alcohol (such as methanol) for stirring again after the generated supernatant is removed, and further allowing to stand the mixture for a certain period of time and then removing the generated supernatant are repeated several times; a method where centrifugal separation is conducted instead of the above standing; a method where desaltation by using ultra-filtration equipment, ion exchange equipment or the like. The metal particles S coated with the organic component of the present embodiment can be obtained by such washing for removing the organic solvent.

The metal colloid dispersion is obtained by mixing the metal particles S coated with the organic component obtained above and the dispersion medium explained in the embodiment above. The method for mixing the metal particle S coated with the organic component and the dispersion medium is not particularly limited, and can be conducted according to the conventional known method by using an agitator or a stirrer. The mixture may be stirred by using a spatula or the like, or thereto an appropriate output of ultrasonic homogenizer may be irradiated.

When obtaining the metal colloid dispersion containing a plurality of metals, the manufacturing method is not particularly limited, and ,when manufacturing the metal colloid dispersion made of silver and other metal, in the preparation procedures of the metal particles S coated with the organic substance, a dispersion containing the metal particles S and other dispersion containing the other metal particles S are separately prepared, and then to be mixed, or a silver ion solution and other metal ion solution may be mixed and then reduced.

The metal particles L cam be produced, for example, by mixing a source of metal ion and a dispersant, and then reducing. In this case, by optimizing amounts of added dispersant and a reducing agent, or the like, it is possible to control the amount of the organic component. As the metal particles L, a commercially available metal powder with a micron meter or a sub-micron meter size may also be used.

In order to regulate an effective amount of the metal particles L, there may be used a heat treatment to the metal particles L, a washing by an acid (sulfuric acid, hydrochloric acid, and nitric acid, etc.), a washing by a fat-soluble organic solvent such as acetone or methanol, and the like. In addition, during the washing, by applying an ultrasonic wave, the organic component can be remover more efficiently.

The organic component contained in the composition for metal bonding and its amount can be confirmed by measurement by using, for example, TG-DTA/GC-MS available from Rigaku Corporation. The measuring conditions may be optionally adjusted, and for example, the TG-DTA/GC-MS measurement may be carried out at the time when maintaining a sample of 10 mg from a room temperature to 550°C in the atmosphere (temperature elevating rate 10°C/min).

In addition, by diluting the composition for metal bonding with the organic component (solvent) which is determined by the measurement of TG-DTA/GC-MS, and then centrifuging (for example, 1000 rpm for 5 minutes), it is possible to separate the metal particles of large size and the metal particles of small size contained in the composition for metal bonding.

Further, a solid particle can be obtained by washing the separated metal particles with methanol, centrifuging (for example, 3300 rpm fir 2 minutes) to precipitate again, removing the supernatant liquid, and then drying under a reduced pressure. By subjecting the obtained each solid particle to the TG-DTA/GC-MS measurement, the organic component adhered on the surface of the metal particles and its amount can be determined.

(3) Bonding method

When using the composition for metal bonding of the present embodiment, a high bonding strength can be obtained in the bonding of members with heating. Namely, a first member to be bonded and a second member to be bonded can be bonded by a composition for bonding applying step where the composition for metal bonding is applied between the first member to be bonded and the second member to be bonded, and a bonding step where the composition for bonding applied between the first member to be bonded and the second member to be bonded is sintered at a desired temperature (for example, 300°C or less, preferably between 150 and 200°C) to bond. In this case, a pressure may be added, but a sufficient bonding strength can be obtained without a particular additional pressure, this is one of the advantages of the present invention. Further, when sintering, temperature can be increased and decreased in stepwise. Further, it is also possible to previously apply a surfactant, a surface activating agent or the like on surfaces of the members to be bonded.

The inventors of the present invention, as a result of intensive study, have found that the first member to be bonded and the second member to be bonded can be more surely bonded (bonded body can be obtained) with a high bonding strength when using the composition for metal bonding of the present embodiment mentioned above as the composition for metal bonding in the composition for metal bonding applying step.

Herein, "application" of the composition for metal bonding of the present embodiment is a concept including both a case of planarly applying and another case of linearly applying (drawing) the composition for metal bonding. It is possible that the configuration of a coating film made of the composition for metal bonding in the state before applying and sintering by heating is desired one. Therefore, in the bonded body of the present embodiment after sintering by heating, the composition for metal bonding is a concept including both a planar bonding layer and a linear bonding layer, and these planar bonding layer and linear bonding layer may be continuous or discontinuous, or may include a continuous portion and a discontinuous portion.

As the first member to be bonded and the second member to be bonded that are usable in the present embodiment, they should be ones where the composition for metal bonding is applied, and that are sintered and bonded by heating, and there is no particular limitation, but members having a thermal resistance to the extent of not damaging at a temperature upon bonding are preferable.

Examples of the materials constituting such members to be bonded include a polyester such as polyamide (PA), polyimide (PI), polyamide imide (PAI), polyethylene terephthalate (PET), polybutylene terephthalate (PBT) or polyethylene naphthalate (PEN); polycarbonate (PC), polyether sulfone (PES), vinyl resin, fluorine resin, liquid crystal polymer, ceramics, glass, metal, or the like, and among them, metallic members to be bonded are preferable. The reason why the metallic members to be bonded are preferable is that they are excellent in thermal resistance, and, they are excellent in affinity with the composition for metal bonding of the present invention where inorganic particles are metal.

Further, the members to be bonded may be various shapes, such as plate-like or strip-like, and it may be rigid or flexible. Thickness of the substrate may also be optionally selected. For improvement of adherence property or adhesiveness or other purpose, a member where a surface layer is formed, or a member where surface treatment such as hydrophilic treatment is carried out may be used.

In the process to apply the composition for metal bonding onto the members to be bonded, it is possible to use various methods, and as described above, it is possible to employ optionally a method selected among dipping, screen print, a spray method, a barcode method, a spin-coating method, an inkjet method, a dispenser method, a pin-transferring method, an application method by a brush, a casting method, a flexo method, a gravure method, and a syringe method.

The coating film after being applied as mentioned above is sintered by heating at, for example, 300°C or less within the range that does not damage the members to be bonded, and the bonded body of the present embodiment can be obtained. In the present embodiment, as mentioned above, because the composition for metal bonding of the present embodiment is used, the bonding layer having superior adhesiveness with regard to the members to be bonded can be obtained, and a strong bonding strength can be more surely obtained.

In the present embodiment, when the composition for metal bonding contains a binder component, from viewpoints to improve strength of the bonding layer and improvement of bonding strength between the members to be bonded, the binder component is also baked, but depending upon circumstances, a baking condition is controlled and the binder component may be removed all with adjustment of the viscosity of the composition for metal bonding for applying to various printing methods as a primary purpose of the binder component.

The method for sintering is not particularly limited, but for example, the members to be bonded can be bonded by sintering so as to adjust the temperature of the composition for metal bonding applied or drawn on the members to be bonded, for example, at 300°C or less, for example, by using a conventionally known oven or the like. The lower limit of the temperature for sintering is not necessarily limited, and it is preferable that it is a temperature than can made bonding of the members to be bonded, and, it is a temperature within the range that does not impair the effect of the present invention. Herein, in the composition for metal bonding after sintering above, from a point to obtain greater bonding strength as much as possible, the lesser a residue of the organic substance is, the better, but a portion of the organic substance may remain within the scope that does not impair the effect of the present invention.

Furthermore, the composition for metal bonding of the present invention contains the organic substance, but unlike the conventional one utilizing thermal-setting such as epoxy resin, it does not obtain the bonding strength after sintering due to action of the organic substance, but it obtains sufficient bonding strength by fusion of the fused metal particles S. Consequently, after bonding, even if the composition for metal bonding is placed in such an environment to be used that a temperature is higher than a bonding temperature, and the residual organic substance is deteriorated or decomposed to be disappeared, the bonding strength will never be decreased, therefore, it is excellent in the thermal resistance.

According to the composition for metal bonding of the present embodiment, since bonding having a bonding layer developing a high conductivity can be realized, even with sintering by heating at a low temperature, for example, at around 150 to 200°C, the members to be bonded which comparatively weak to heat, can be bonded. Further, a sintering time is not particularly limited, and it should be a sintering time for enabling to bond the members at the sintering temperature.

In the present embodiment, in order to further enhance the adhesiveness with the members to be bonded and the bonding layer, the surface treatment of the members to be bonded may be conducted. Examples of the surface treatment include a dry treatment such as corona treatment, plasma treatment, UV treatment or electron beam treatment; a method where a primer layer and a conductive paste receptive layer is previously formed on the substrate; and the like.

In the above, the typical embodiments of the present invention are explained, but the present invention is not be limited thereto. For example, in the embodiments above, the metal colloid dispersion where metal particles have been employed as the inorganic particles is explained, and for example, inorganic particles such as tin-doped indium, alumina, barium titanate or iron lithium phosphate, excelling in, for example, conductivity, thermal conductivity, dielectricity, ion conductivity or the like, can also be used.

In the following, in Examples, the composition for metal bonding of the present invention is further explained, but the present invention is not limited to these examples at all. Examples

«Example 1»

200 ml of toluene (first class grade chemicals available from Wako Pure Chemical Industries, Ltd.) and 15 g of hexylamine (first class grade chemicals available from Wako Pure Chemical Industries, Ltd.) were mixed and sufficiently stirred with a magnetic stirrer. While further stirring, 10 g of silver nitrate (special grade chemicals available from Toyo Chemical Industrial Co., Ltd.) was added thereto, and after the silver nitrate was dissolved, 10 g of SOLSPERSE 11200 was added. A 0.02 g/ml of sodium borohydride solution prepared by adding 1 g of sodium borohydride (available from Wako Pure Chemical Industries, Ltd.) into 50 ml of ion-exchanged water was added dropwise to this mixture, and then a liquid containing silver fine particles was obtained.

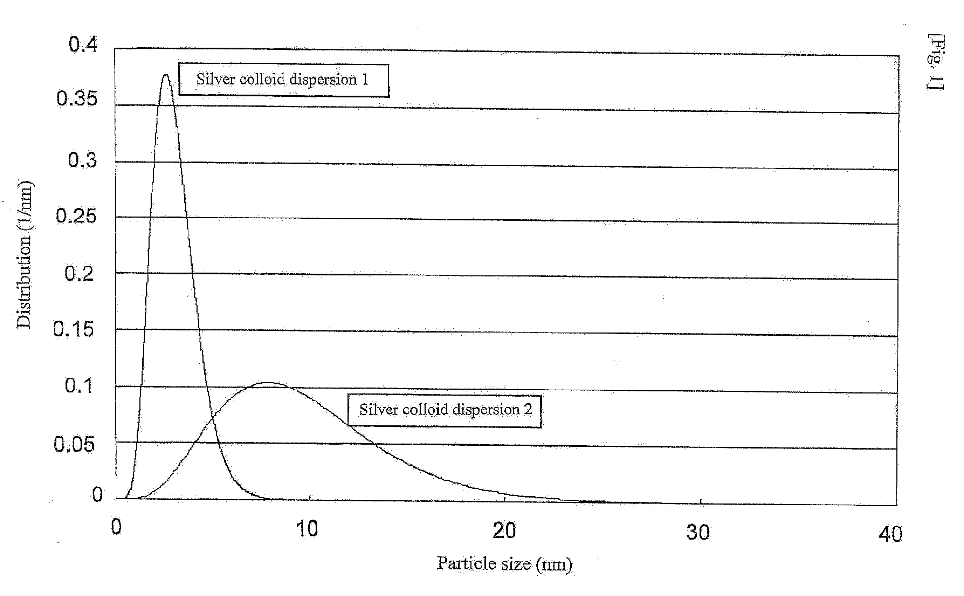

After stirring the liquid containing silver fine particles for one hour, 200 ml of methanol (special grade chemicals available from Wako Pure Chemical Industries, Ltd.) was added, and the silver fine particles were coagulated and precipitated. In addition, after the silver particles were completely precipitated with centrifugal separation, toluene and methanol which are supernatants, were removed and excess organic substances were removed, and approximately 6 g of the silver fine particles were obtained. Using 5 g of the obtained silver fine particles, as a dispersion medium, 1 g of terpineol (special grade chemicals available from Wako Pure Chemical Industries, Ltd.) was added and stirred to obtain the silver colloid dispersion 1. As a result of measuring an average particle size of the silver fine particles 1 (namely the metal particles S having a small average particle size) contained in the silver colloid dispersion 1 by the small-angle scattering method, the average particle size was 3 nm (Ds). The results are shown in Fig. 1.

In order to remove impurities such as organic components and inorganic components which were adhered to the silver particles (average particle size 0.2 $\mu$m (DL)) available from Mitsui Mining & Smelting Co., Ltd., the following treatment was carried out. 10 g of silver particles was weighted and poured into a 50 ml aqueous solution that was prepared by diluting 0.1 ml of 35 % nitric acid to 100ml by ion-exchanged water. After ultrasonic treatment, the silver particles were precipitated by centrifugal procedure, and then a supernatant was removed. Further, the particles were poured into 50 ml of methanol. After ultrasonic treatment, the silver particles were precipitated by centrifugal procedure, and then a supernatant was removed. After that, methanol was removed by a diaphragm pump. A content of the organic component contained in the treated silver particles 1 (namely the metal particles L having a large average particle size) was measured by thermogravimetric analysis. The particle size ratios ($D_S/D_L$) are shown in Table 1.

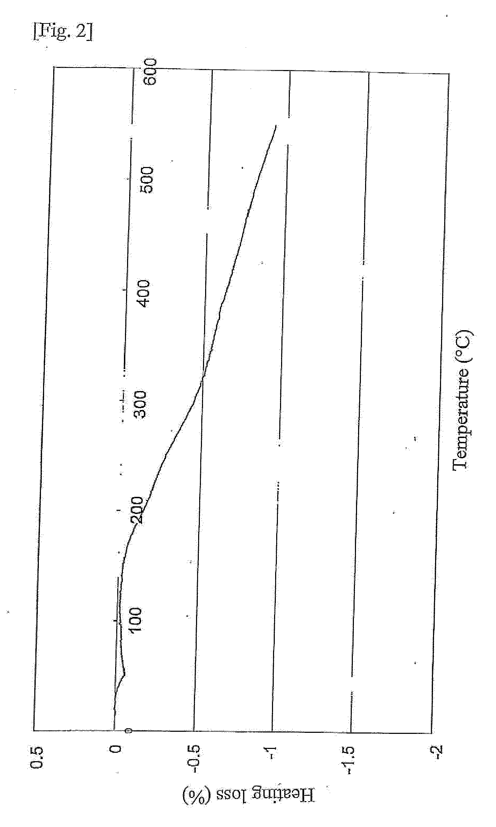

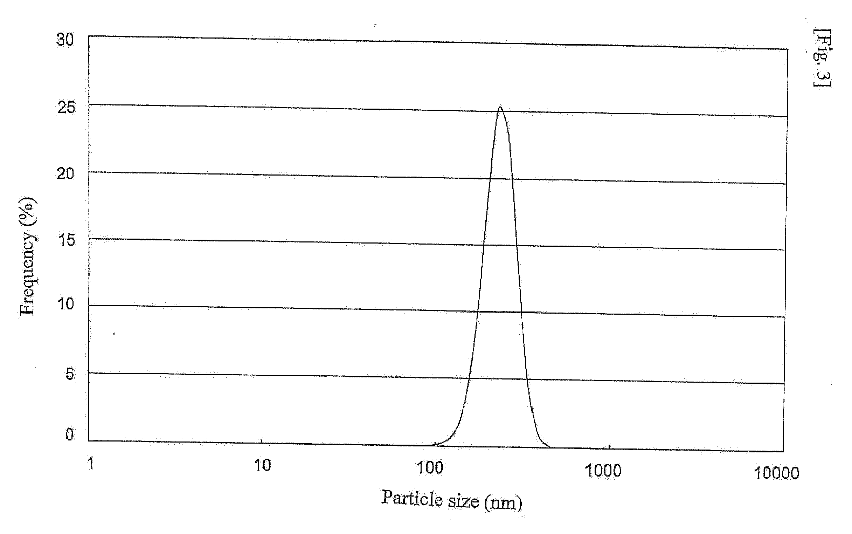

Specifically, the silver particles 1 were heated at a temperature elevating rate of 10°C/min in a nitrogen atmosphere, and contents of the organic components and inorganic components as a weight loss from a room temperature to 500°C. As a result, a heating loss was 0.85 wt %. The result of the measuring is shown in Fig. 2. To the contrary, a heating loss of silver particles which were not subjected to the treatment (silver particle 2) was 1.15 wt %. A particle size of the silver particles 1 was measured by the dynamic light scattering method was 217 nm. The result of the measurement is shown in Fig. 3.

A silver particle composition 1for bonding was prepared by adding 4 g of the silver particles 1 to 5 g of the silver colloid dispersion 1, and further adding 0.5 g of terpineol as a solvent to regulate a viscosity, and then mixing sufficiently.

[Measurement of bonding strength]

A small amount of the above silver particle composition 1 for bonding by using a die bonder (available from HiSOL, Inc.) was put on a copper plate (10 mm square), and thereon a copper plate which was plated by gold (bottom area 2 mm x 2 mm) was laminated. After that, the obtained laminated article was put in an oven in a vacuum atmosphere at a room temperature, and then the atmosphere was replaced by the nitrogen atmosphere. The sintering treatment was conducted in the nitrogen atmosphere by elevating a temperature from a room temperature to 100°C at 10°C/min and maintaining for 60 minutes, followed by elevating a temperature to 300°C at 10°C/min and maintaining at 300°C for 30 minutes. Upon the sintering treatment, no pressure was applied from outside.

After the laminated article was taken out and cooled, the laminated article was subjected to the bonding strength test (shear height: 10 micron from the substrate, shear tool speed: 0.01 mm/sec) in a nitrogen atmosphere by using Bondtester (PTR-1101 available from RHESCA Corporation). The bonding strength at peeling was converted by the bottom area of the chip, and the results are shown in Table 1. The numerals in the evaluation results are represented by MPa.

[Measurement of coefficient of line expansion]

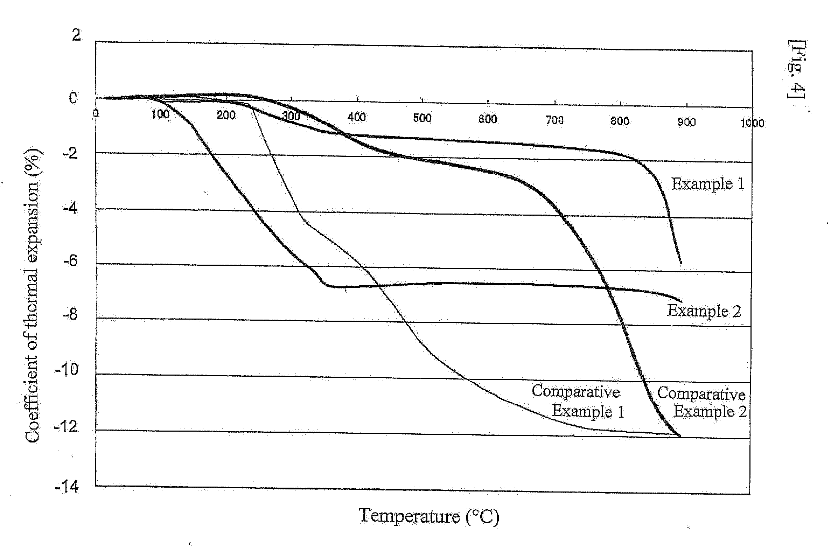

A pellet (5 mm length) to be measured was prepared by hardening a solid of the silver particles 1 and the silver fine particles 1 and the organic component without adding a dispersing solvent of the composition for bonding. By heating the pellet by TMA (available from Rigaku Corporation) at an elevating temperature of 10°C/min in a nitrogen atmosphere, and a coefficient of line expansion of a room temperature to 900°C was measured. The result of the measurement is shown in Fig. 4.

«Example 2»

0.40 g of SOLSPERSE 16000 which is a polymer dispersant, 2.0 g of hexylamine (special class grade chemicals available from Wako Pure Chemical Industries, Ltd.) and 0.40 g of dodecylamine (first class grade chemicals available from Wako Pure Chemical Industries, Ltd.) were mixed, and the mixture was sufficiently stirred with a magnetic stirrer. While further stirring, 6.0 g of silver nitrate was added thereto, and the mixture was thickened. The obtained thickened substance was put in a constant-temperature bath at 100°C, and it was reacted for approximately 15 minutes. In order to replace the dispersion medium of a suspension, after adding 10 ml of methanol and stirring, silver fine particles were precipitated and separated by centrifugal separation, and 10 ml of methanol was added to the separated silver fine particles again, and silver fine particles 2 were precipitated and separated by stirring and centrifugal separation.

Using 5 g of the obtained silver fine particles 2, as a dispersion medium, 1 g of dihydroterpinyl acetate was added and stirred to obtain the silver colloid dispersion 2. As a result of measuring a particle size of the silver fine particles 2 contained in the silver colloid dispersion 2 by the small-angle scattering method, the particle size was 10 nm. The results are shown in Fig. 1.

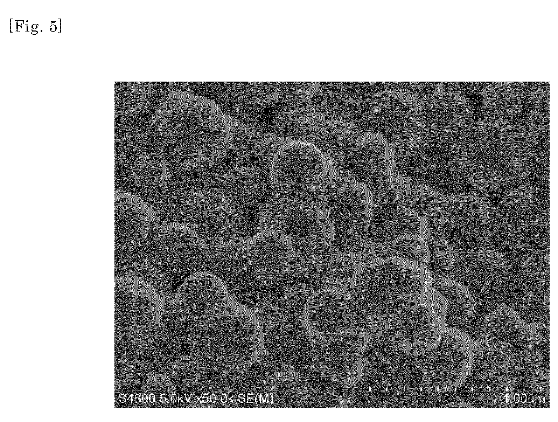

4 g of the silver particles 1 obtained by treating in the same manner as in Example 1 and 0.5 g of dihydroterpinyl acetate were mixed with 5 g of the silver colloid dispersion 2 to obtain a silver particle composition 2 for bonding. Various tests were conducted in the same manner as in Example 1, and the results are shown in Table 1 and Fig.4. In addition, the scanning electron microscopic photograph of the dried silver particle composition 2 for bonding is shown in Fig. 5.

«Example 3»

A silver particle composition 3 for bonding was obtained in the same manner as in Example 1 except that silver particles 3 having an average particle size of 3 $\mu$m which was prepared by treatment for removing impurities such as the organic components and inorganic components in the same manner as in Example 1 was used instead of the silver particles 1. Further, the bonding strength was measured in the same manner as in Example 1, and the results are shown in Table 1.

«Example 4»

A silver particle composition 4 for bonding was obtained in the same manner as in Example 2 except that silver particles 3 having an average particle size of 3 $\mu$m which was prepared by treatment for removing impurities such as the organic components and inorganic components in the same manner as in Example 1 was used instead of the silver particles 1. Further, the bonding strength was measured in the same manner as in Example 1, and the results are shown in Table 1.

«Comparative Example 1»

A comparative silver particle composition 1 for bonding was obtained in the same manner as in Example 1 except that an average particle size of the silver fine particles was 1 nm by adding stearic acid instead of SOLSPERSE 11200, and that the silver particles 1 were not added. Further, the bonding strength and the line expansion were measured in the same manner as in Example 1, and the results are shown in Table 1 and Fig. 4.

«Comparative Example 2»

A comparative silver particle composition 2 for bonding was obtained in the same manner as in Example 1 except that the silver colloid dispersion 1 was not added, and that the silver particles 2 (treatment for removing impurities such as the organic components and inorganic components was not carried out) was used instead of the silver particles 1. Further, the bonding strength and the line expansion were measured in the same manner as in Example 1, and the results are shown in Table 1 and Fig. 4.

«Comparative Example 3»

A comparative silver particle composition 3 for bonding was obtained in the same manner as in Example 1 except that an average particle size of the silver fine particles was 1 nm by adding stearic acid instead of SOLSPERSE 11200, and that the silver particles (average particle size 13 $\mu$m) available from FUKUDA METAL FOIL & POWDER CO., LTD. were used instead of the silver particles (average particle size 0.2 $\mu$m) available from Mitsui Mining & Smelting Co., Ltd.
Further, the bonding strength was measured in the same manner as in Example 1, and the results are shown in Table 1.

[Table 1]

|  | EXAMPLE | | | | COMPARATIVE EXAMPLE | | |
|---|---|---|---|---|---|---|---|
|  | 1 | 2 | 3 | 4 | 1 | 2 | 3 |
| Particle size of Silver fine particle | 3nm | 10nm | 3nm | 10nm | 1nm | Not added | 1nm |
| Particle size of Silver particle | 0.2$\mu$m | 0.2$\mu$m | 3$\mu$m | 3$\mu$m | Not added | 0.2$\mu$m | 13$\mu$m |
| Particle size ratio (Silver fine particle/ Silver particle) | 0.015 | 0.05 | 0.001 | 0.00333 | - | - | 0.0000769 |
| Bonding strength(MPa) | 20.1 | 18.5 | 25.5 | 23.1 | 0.5 | 1.5 | 0.1 |

As is clear from Table 1, when the mixture systems (Examples) having an appropriate particle size ratio of the silver particles and the silver fine particles give high strength. From Fig. 4, in Examples, the absolute amount of the shrinkage is relatively small, and no shrinkage is observed at a melting point of 350 to 800°C. From these facts, it is confirmed that, in Examples, there is no space in the bonding layer due to too large shrinkage and there is no adverse effect to the high temperature reliability. Further, from Fig. 5, it is confirmed that the silver fine particles corresponding to the metal particles S and the silver particles corresponding to the metal particles L are mixed uniformly.

«Example 5»

A silver particle composition 5 for bonding was obtained in the same manner as in Example 1 except that silver fine particles 2 prepared in Example 2 were used instead of the silver particles 1. Further, the bonding strength was measured in the same manner as in Example 1, and the results are shown in Table 2.

«Example 6»

A silver particle composition 6 for bonding was obtained in the same manner as in Example 1 except that the silver particles 2 (treatment for removing impurities such as the organic components and inorganic components was not carried out) were used instead of the silver particles 1. Further, the bonding strength was measured in the same manner as in Example 1, and the results are shown in Table 2.

«Example 7»

A silver particle composition 7 for bonding was obtained in the same manner as in Example 1 except that an average particle size of the silver fine particles was 1 nm by adding stearic acid instead of SOLSPERSE 11200. Further, the bonding strength was measured in the same manner as in Example 1, and the results are shown in Table 2.

«Comparative Example 4»

A comparative silver particle composition 4 for bonding was obtained in the same manner as in Example 1 except that the silver particles 1 were not added. Further, the bonding strength was measured in the same manner as in Example 1, and the results are shown in Table 2.

«Comparative Example 5»

A comparative silver particle composition 5 for bonding was obtained in the same manner as in Example 1 except that the silver colloid dispersion 1 was not added. Further, the bonding strength was measured in the same manner as in Example 1, and the results are shown in Table 2.

[Table 2]

|  | EXAMPLE | | | COMPARATIVE EXAMPLE | |
|---|---|---|---|---|---|
|  | 5 | 6 | 7 | 4 | 5 |
| Particle size $D_S$ of metal particle S | 3nm | 3nm | 1nm | 3nm | - |
| Particle size $D_L$ of metal particle L | 10nm | $0.2\mu m$ | $0.2\mu m$ | - | $0.2\mu m$ |
| Particle size ratio ($D_S/D_L$) | 0.3 | 0.015 | 0.005 | - | - |
| Bonding strength(MPa) | 8.1 | 14.1 | 7.9 | 2.2 | 1.3 |

As is clear from Table 2, when the mixture systems (Examples) having an appropriate particle size ratio of the metal particles S and the metal particles L give high strength. As is clear from the comparison of Example 6 with Example 1, when using the silver particles treated so as to be a small heating loss as the metal particles L, the strength is advantageously improved.

**Claims**

1. A composition for metal bonding, comprising:

two or more kinds of metal particles having different average particle sizes,
an organic component, and
a dispersant,
wherein a particle size ratio ($D_S/D_L$) of an average particle size $D_S$ of metal particles S which have the smallest average particle size to an average particle size $D_L$ of metal particles L which have the largest average particle size is $1 \times 10^{-4}$ to 0.5.

2. The composition for metal bonding according to claim 1, wherein the particle size ratio ($D_S/D_L$) is $1 \times 10^{-3}$ to 0.2.

3. The composition for metal bonding according to claim 1 or 2, wherein the average particle size Ds is 1 to 50 nm, and the average particle size $D_L$ is 0.1 $\mu$m to 10 $\mu$m.

4. The composition for metal bonding according any one of claims 1 to 3, wherein a mass ratio ($M_S/M_L$) of a mass Ms of the metal particles S and a mass $M_L$ to the metal particles L which are contained in the composition for metal bonding is 3/7 to 7/3.

5. The composition for metal bonding according any one of claims 1 to 4, wherein the organic component which is adhered to at least a part of the surface of the metal particles S is an alkylamine and a polymer dispersant.

6. The composition for metal bonding according any one of claims 1 to 5, wherein the alkylamine contains at least one kind of an amine having 4 to 7 carbon atoms.

7. The composition for metal bonding according any one of claims 1 to 6, wherein the metal particles L has less than 1 % by mass of a heating loss when heating from a room temperature to 500°C at a temperature elevating rate of 10°C/min in a nitrogen atmosphere.

8. The composition for metal bonding according any one of claims 1 to 7, wherein the metal particles do not contain particles that are converted to metal by the thermal decomposition.

9. The composition for metal bonding according any one of claims 1 to 8, wherein the metal particles are silver-based metal particles.

[Fig. 1]

[Fig. 2]

[Fig. 3]

[Fig. 4]

[Fig. 5]

## INTERNATIONAL SEARCH REPORT

| International application No. |
|---|
| PCT/JP2014/002555 |

A. CLASSIFICATION OF SUBJECT MATTER
*B22F7/06*(2006.01)i, *B22F1/02*(2006.01)i, *B22F9/24*(2006.01)i, *B82Y30/00*
(2011.01)i, *H01B1/00*(2006.01)i, *H01B1/22*(2006.01)i

According to International Patent Classification (IPC) or to both national classification and IPC

B. FIELDS SEARCHED

Minimum documentation searched (classification system followed by classification symbols)
B22F7/06, B22F1/02, B22F9/24, B82Y30/00, H01B1/00, H01B1/22

Documentation searched other than minimum documentation to the extent that such documents are included in the fields searched
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2012-052198 A (Nihon Handa Co., Ltd.), 15 March 2012 (15.03.2012), claims; paragraph [0040] & JP 4870223 B1 | 1-9 |
| X | JP 2011-094223 A (Mitsuboshi Belting Ltd.), 12 May 2011 (12.05.2011), claims; paragraphs [0085], [0086] (Family: none) | 1-9 |
| X | JP 2008-161907 A (Hitachi, Ltd.), 17 July 2008 (17.07.2008), claims; paragraph [0037] & US 2008/0173398 A1 & US 2011/0204125 A1 & US 2012/0104618 A1 | 1-9 |

☐ Further documents are listed in the continuation of Box C.     ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 11 August, 2014 (11.08.14) | 19 August, 2014 (19.08.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

22

**EP 2 998 050 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008063688 A

- JP 2012046779 A